# EUROPEAN PATENT SPECIFICATION

(11) **EP 1 770 879 B1**
(45) Date of publication and mention of the grant of the patent: **05.11.2014**
(21) Application number: 06121364.1
(22) Date of filing: 27.09.2006
(51) Int. Cl.: H04W 88/04, H04B 7/26, H04L 12/28

(54) **Apparatus and method for communicating frames in a multi-hop relay broadband wireless access communication system**
Vorrichtung und Verfahren für die Kommunikation von Rahmen in einem Multi-Hop Relay Breitbandfunkzugriffskommunikationssystem
Dispositif et procédé pour communiquer des trames dans un système d'accès multi-sauts de relais sans fil à large bande

(30) Priority: 28.09.2005 KR 20050090764
(43) Date of publication of application: 04.04.2007
(73) Proprietor: Samsung Electronics Co., Ltd., Suwon-si, Gyeonggi-do, 443-742 (KR)
(72) Inventor: Jang, Jae-Hyuk, Chilseong-dong 2ga, Bukgu, Deagu (KR); Lim, Eun-Taek, Suwon-si, Gyeonggi-do (KR); Chang, Young-Bin, Dongan-gu, Anyang-si, Gyeonggi-do (KR); Ro, Jung-Min, Gangnam-gu, Seoul (KR); Park, Dong-Seek, Yongin-si, Gyeonggi-do (KR); Cho, Young-Kwon, Yeongtong-gu, Suwon-si, Gyeonggi-do (KR); Choi, Joon-Young, Yeongtong-gu, Suwon-si, Gyeonggi-do (KR)
(74) Representative: Grünecker, Kinkeldey, Stockmair & Schwanhäusser

(56) References cited:
- DE-A1- 19 950 005
- US-A1- 2002 007 414
- US-A1- 2004 063 451

## Description

### PRIORITY

This application claims priority under 35 U.S.C. § 119 to an application entitled "Apparatus and Method for Communicating Frames in Multi-Hop Relay Broadband Wireless Access Communication System" filed in the Korean Intellectual Property Office on September 28, 2005 and allocated Serial No. 2005-90764, the contents of which are incorporated herein by reference.

### BACKGROUND OF THE INVENTION

### 1. Field of the Invention

The present invention relates generally to an apparatus and method for communicating frames in a cellular communication system, and in particular, to an apparatus and method for communication frames in a multi-hop relay Broadband Wireless Access (BWA) system.

### 2. Description of the Related Art

Research is actively being conducted to provide services having varying Quality-of-Services (QoSs) with a data rate of about 100 Mbps in the next-generation fourth-generation (4G) communication system. The 4G communication system is evolving to provide a high-rate data service that supports mobility and QoS in a BWA system such as a Local Area Network (LAN) system and a Metropolitan Area Network (MAN) system. Typical examples of the above system are an Institute of Electrical and Electronics Engineers (IEEE) 802.16d and 802.16e systems.

The IEEE 802.16d and 802.16e systems use an Orthogonal Frequency Division Multiplexing (OFDM)/ Orthogonal Frequency Division Multiple Access (OFDMA) scheme. The IEEE 802.16d system does not consider the mobility of a Subscriber Station (SS) at all and considers only a single cell structure. On the contrary, the IEEE 802.16e system considers the mobility of an SS.

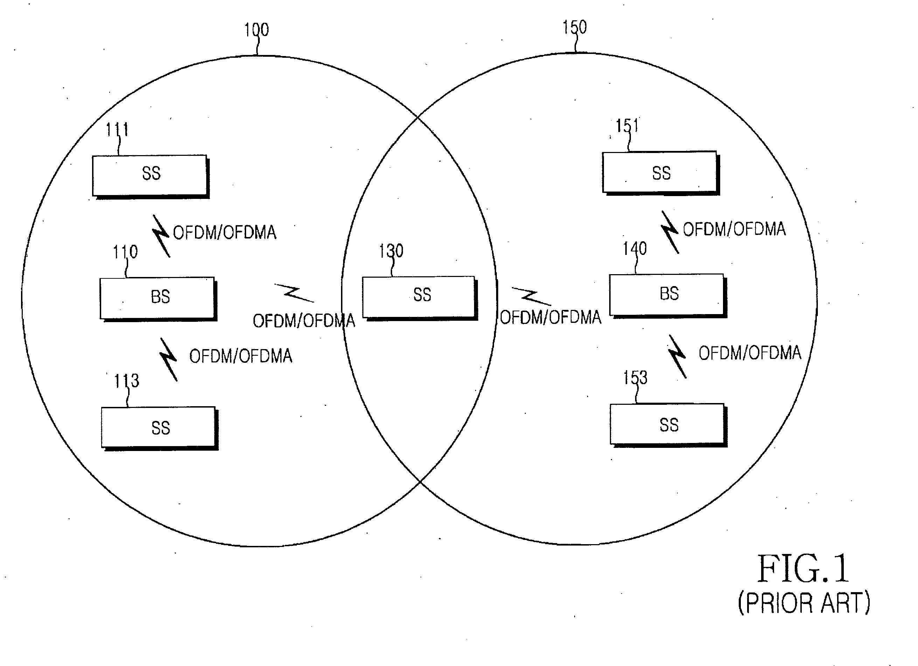

FIG. 1 is a schematic block diagram of a conventional IEEE 802.16e system.

Referring to FIG. 1, the IEEE 802.16e system has a multi-cell structure, and includes a cell 100 managed by a BS 110, a cell 150 managed by a BS 140, and a plurality of SSs 111, 113, 130, 151 and 153. The signal exchange between the BSs 110 and 140 and the SSs 111, 113, 130, 151 and 153 is performed using an OFDM/OFDMA scheme. The SS 130 is located in a boundary region (i.e., a handover region) between the cells 100 and 150. When the SS 130 moves into the cell 150 of the BS 140 during communication of signals with the BS 110, a serving BS of the SS 130 changes from BS 110 to BS 140.

Because a signaling communication between a stationary BS and an SS is performed through a direct link as illustrated in FIG. 1, the IEEE 802.16e system can easily provide a high-reliability wireless link between the BS and the SS. However, because the BS is stationary, the IEEE 802.16e system has a low flexibility in constructing a wireless network. Accordingly, the used of the IEEE 802.16e system makes it difficult to provide an efficient communication service in a radio environment where significant changes occur in traffic distributions or call requirements.

In order to overcome this problem, a stationary Relay Station (RS), a mobile RS or general SSs can be used to apply a multi-hop relay data transmission scheme to a conventional cellular communication system such as the IEEE 802.16e system. The use of the multi-hop relay wireless communication system makes it possible to reconfigure a network in rapid response to a change in communication environments and to operate the entire wireless network more efficiently. For example, the multi-hop relay wireless communication system can expand a cell coverage area and increase a system capacity. That is, when channel conditions between a BS and a mobile station (MS) are poor, an RS is installed between the BS and the MS to establish a multi-hop relay link therebetween, thereby making it possible to provide the MS with a radio channel having better channel conditions. In addition, the multi-hop relay scheme is used in a cell boundary region with poor channel conditions, thereby making it possible to provide a high-rate data channel and to expand the cell coverage area.

Document US 2002/007414 A1 discloses a network system containing a radio terminal with a first communication interface.which can only be used for reception and a second communication interface which can be used for transmission and reception, a first sub-network to which the radio terminal can be connected using the first communication interface through a radio base station of a downlink radio network, a second sub-network to which the radio terminal can be connected using the second communication interface through a bidirectional communication network, and a backbone network to which the first and second sub-networks are connected.

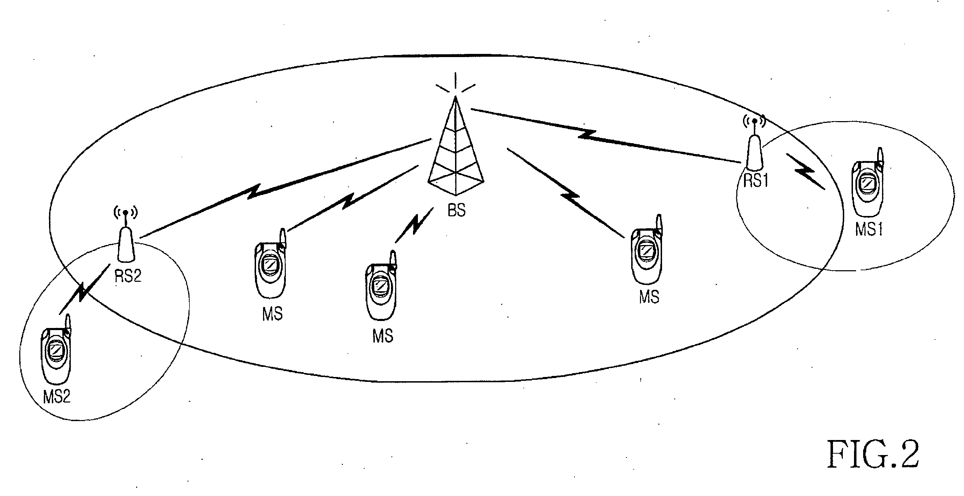

FIG. 2 is a block diagram of a conventional BWA system that uses a multi-hop relay scheme to expand a BS coverage area.

Referring to FIG. 2, near MSs, which are located inside a cell coverage area, communicate directly with a BS. Far MSs 1 and 2, which are located outside the cell coverage area, communicate with the BS via RSs 1 and 2, respectively. That is, the RSs 1 and 2 relay signals between the BS and the far MS 1 and between the BS and the far MS 2, respectively. At this point, general control channels (e.g., a preamble channel, a MAP channel, a system information channel, a ranging channel, and a channel information feedback channel) must be suitably disposed in a frame so that the far MSs can perform the same operation as the near MSs.

In addition to expanding the cell coverage area, the multi-hop relay scheme can increase a data rate using a diversity effect. At present, the most important purpose of the multi-hop relay scheme is to expand the cell coverage area. A simple retransmission method is performed using an Amplify/Forward scheme or a Decode/Forward scheme. Whichever scheme it may use, the simple retransmission method makes it easy to implement an RS. However, the simple retransmission method is disadvantageous in that unnecessary data is also retransmitted. That is, resources are wasted unnecessarily because the RS also retransmits data from the near MSs that communicate directly with the BS. Thus, there exists a need for a method for utilizing resources efficiently while supporting far MSs.

### SUMMARY OF THE INVENTION

An object of the present invention is to substantially solve at least the above problems and/or disadvantages and to provide at least the advantages below. Accordingly, an object of the present invention is to provide a frame structure that makes it possible to efficiently utilize resources in a multi-hop relay cellular communication system.

Another object of the present invention is to provide an apparatus and method that enables an RS to selectively relay data in a multi-hop relay cellular communication system.

A further object of the present invention is to provide an apparatus and method that enables RSs in different areas to use the same resource.

According to the present invention, there is provided a method for communicating at an RS in a multi-hop relay cellular communication system, the method including receiving a Downlink (DL) signal from a BS and reconfiguring the received DL signal during a first section of a frame, and transmitting the reconfigured DL signal to an MS during a second section of the frame, receiving an Uplink (UL) signal from the MS and reconfiguring the received UL signal during a third section of the frame, and transmitting the reconfigured UL signal to the BS during a fourth section of the frame.

According to the present invention, there is provided a relay station (RS) for a multi-hop relay cellular communication system, including a recoverer for recovering a control channel message and traffic data from a first section signal of a frame received from a BS, an analyzer for analyzing the control channel message to select traffic data to be relayed by the RS, and a control channel reconfigurer for allocating resources to the selected traffic data and reconfiguring the control channel message according to the resource allocation.

According to the present invention, there is provided a method for communicating at a BS in a multi-hop relay cellular communication, including determining where the DL data needs to be transmitted through an RS when DL data is generated, generating a channel allocation message including ID information of a corresponding RS if the DL data needs to be transmitted through an RS, and configuring and transmitting a DL signal including the channel allocation message and the DL data.

According to the present invention, there is provided a method for communicating a frame in a multi-hop relay cellular communication system, including transmitting a signal from a BS to an RS and a near MS during a first section of the frame, transmitting a signal from the RS to a far MS during a second section of the frame, transmitting a signal from the far MS to the RS during a third section of the frame, and transmitting a signal from the near MS and the RS to the BS during a fourth section of the frame.

### BRIEF DESCRIPTION OF THE DRAWINGS

The above and other objects, features and advantages of the present invention will become more apparent from the following detailed description when taken in conjunction with the accompanying drawings in which:
FIG. 1 is a block diagram of a conventional IEEE 802.16e system;
FIG. 2 is a block diagram of a conventional BWA system using a multi-hop relay scheme for expanding a BS coverage area;
FIG. 3 is a diagram illustrating a frame structure for a multi-hop relay BWA system according to the present invention;
FIG. 4 is a diagram illustrating a frame structure that provides a spatial multiplexing gain using an RS according to the present invention;
FIG. 5 is a flow diagram illustrating a signaling procedure for frame communication in a multi-hop relay BWA system according to the present invention;
FIG. 6 is a flowchart illustrating a signaling procedure for an RS in a multi-hop relay BWA system according to the present invention; and
FIG. 7 is a block diagram of an RS for a multi-hop relay BWA system according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail for the sake of clarity and conciseness. Also, the terms used herein are defined according to the functions of the present invention. Thus, the terms may vary depending on a user's intention and usage. That is, the terms used herein must be understood based on the descriptions made herein.

In the following description, an MS communicating directly with a BS is called "near MS" and an MS communicating with a BS via an RS is called "far MS".

The multi-hop relay BWA system uses an OFDM/OFDMA scheme.

Although the multi-hop relay BWA system is taken as an example in the following description, the present invention can be applied to any cellular communication system that uses a multi-hop relay scheme.

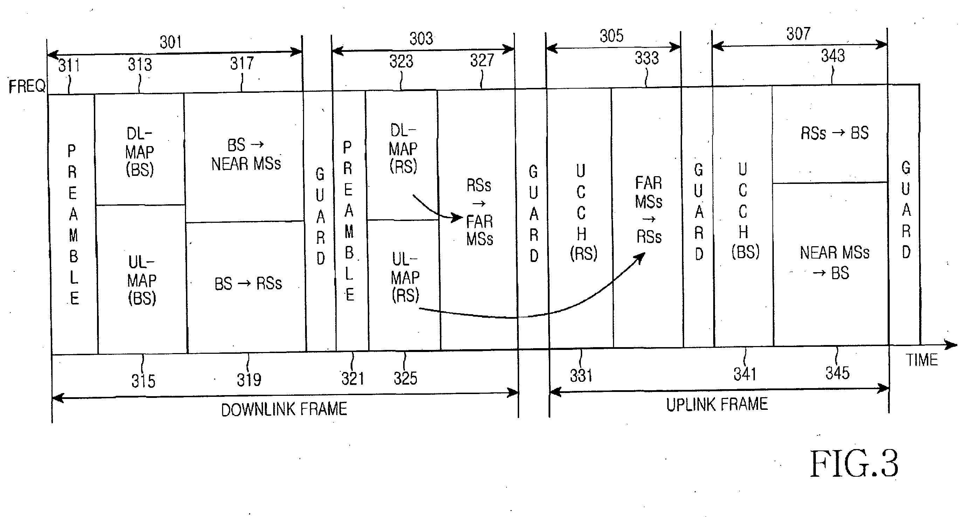

FIG. 3 is a diagram illustrating the structure of a frame for a multi-hop relay BWA system according to the present invention. In FIG. 3, the abscissas and the ordinates represent time and frequency, respectively.

Referring to FIG. 3, the frame is classified into a DL frame and a UL frame. The DL frame includes a first section 301 and a second section 303. The first section 301 is used to transmit DL signals from a BS to RSs and near MSs, while the second section 303 is used to transmit DL signals from RSs to far MSs. The UL frame includes a third section 305 and a fourth section 307. The third section 305 is used to transmit UL signals from the far MSs to the RSs, while the fourth section 307 is used to transmit UL signals from the near MSs and the RSs to the BS.

The first section 301 is used for transmission of DL data from a BS. The first section 301 includes a preamble field 311, a DL-MAP field 313, a UL-MAP field 315, and DL data TX fields 317 and 319. The preamble field 311 is used to allocate (or transmit) a preamble signal for cell search and synchronization. The DL-MAP field 313 is allocated channel allocation information (BS_DL-MAP) of DL data to be transmitted in the DL data TX fields 317 and 319. The UL-MAP field 315 is allocated channel allocation information (BS_UL-MAP) of UL data to be received in the fourth section 307.

As illustrated in FIG. 3, a Frequency Division Multiplexing (FDM) scheme is used to divide the entire DL data TX field into a "BS→Near MSs" TX field 317 for data transmission from the BS to the near MSs and a "BS→RSs" TX field 319 for data transmission from the BS to the RSs. It should be noted that the FDM scheme is used for logical division (i.e., subchannel division), not for physical division. In another embodiment, a frequency band may be physically divided to discriminate between the "BS→Near MSs" TX field and the "BS→RSs" TX field. In the present embodiment, resources are allocated using an FDM scheme. In another embodiment, resources may be allocated using a Time Division Multiplexing (TDM) scheme or on a burst basis.

The second section 303 is used for transmission of DL data from the RSs, and includes a preamble field 321, a DL-MAP field 323, a UL-MAP field 325 and a DL data TX field 327. The preamble field 321 is allocated a preamble signal for initial access of far MSs that are located outside a coverage area of the BS. The preamble signal may be identical to a preamble signal of the BS or may be a signal of a predetermined pattern for discriminating between the RSs.

The DL-MAP field 323 is allocated channel allocation information (RS_DL-MAP) of RS DL data to be transmitted in the DL data TX field 327. The RS_DL-MAP is formatted differently from the BS_DL-MAP that is transmitted from the BS. That is, an RS does not simply retransmit data received from the BS, but reconfigures and retransmits only necessary data. The UL-MAP field 325 is allocated channel allocation information (RS_UL-MAP) of UL data to be received in the third section 305.

The third section 305 is used for transmission of UL data from the far MSs, and includes an Uplink Control CHannel (UCCH) field 331 and a UL data TX field 333 for data transmission from the far MSs to the RSs. The UCCH field 331 is allocated UL control channels transmitted to the RSs. Examples of the UL control channels are a random access channel and a ranging channel necessary for an OFDM/OFDMA operation, a Channel Quality Information (CQI) feedback channel and a Hybrid Automatic Repeat reQuest ACKnowledgement/Negative-ACKnowledgement (H-ARQ ACK/NACK) channel.

The fourth section 307 is used for transmission of UL data from the near MSs and the RSs. The fourth section 307 includes a UCCH field 341 and UL data TX fields 343 and 345. The UCCH field 341 is allocated a UL control channel transmitted to the BS. Examples of the UL control channel are a random access channel and a ranging channel necessary for an OFDM/OFDMA operation, a CQI feedback channel and an H-ARQ ACK/NACK channel.

As illustrated in FIG. 3, an FDM scheme is used to divide the entire UL data TX field into an "RSs→BS" UL data TX field 343 and a "Near MSs→BS" UL data TX field 345. It should be noted that the FDM scheme is used for logical division (i.e., subchannel division), not for physical division. In another embodiment, a frequency band may be physically divided to discriminate between the "RSs→BS" UL data TX field and the "Near MSs→BS" UL data TX field. In the present embodiment, resources are allocated using an FDM scheme. In another embodiment, resources may be allocated using a TDM scheme or on a burst basis.

As illustrated in FIG. 3, guard regions for smooth communication are disposed between the first section 301 and the second section 303, between the second section 303 and the third section 305 and between the third section 305 and the fourth section 307, respectively.

In order to enable the RSs to sort out retransmission data, the BS_DL-MAP transmitted in the DL-MAP field 313 must include not only DL data location information but also information about which RS must be used to transmit the data.

Table 1 below shows an example of a MAP Information Element (IE) for one user or session.

**Table 1**

| Field | Description |
|---|---|
| User (connection) ID | User or Session ID |
| MCS Level | Burst Modulation/Coding Information |
| Location Information | Actual Data location in Burst (Time/Frequency Information) |
| RS ID | Information about the use or not of RS and an RS ID |

As shown in Table 1, the MAP IE includes location information in a DL data TX section and a Modulation Coding Scheme (MCS) level and additionally includes an RS ID field. The RS ID field contains information about an RS, such as information about the use of the RS and a corresponding RS ID. Using the RS ID field, the RSs select data to be retransmitted. Thereafter, the RSs reconfigure and retransmit MAP information in accordance with the selected data.

Depending on the values of the RS ID field, the RSs may retransmit the same or different data simultaneously. When RSs are located densely, they can retransmit the same data using a broadcast RS ID. In this case, the RSs must be able to transmit data without collision. For example, the BS may appoint the order of priority so that the RSs can transmit data without collision.

Referring to FIG. 2, the RS 1 and the RS2 are located without interference with each other, and do not interfere with each other even when they transmit data simultaneously. Therefore, when the BS uses the DL-MAP to mark the MS1I and the MS2 with an RS ID of the RS 1 and an RS ID of the RS2, respectively, RS1 and RS2 can simultaneously transmit data using the same time/frequency resource. In this case, it is possible to achieve a spatial multiplexing gain using the RSs.

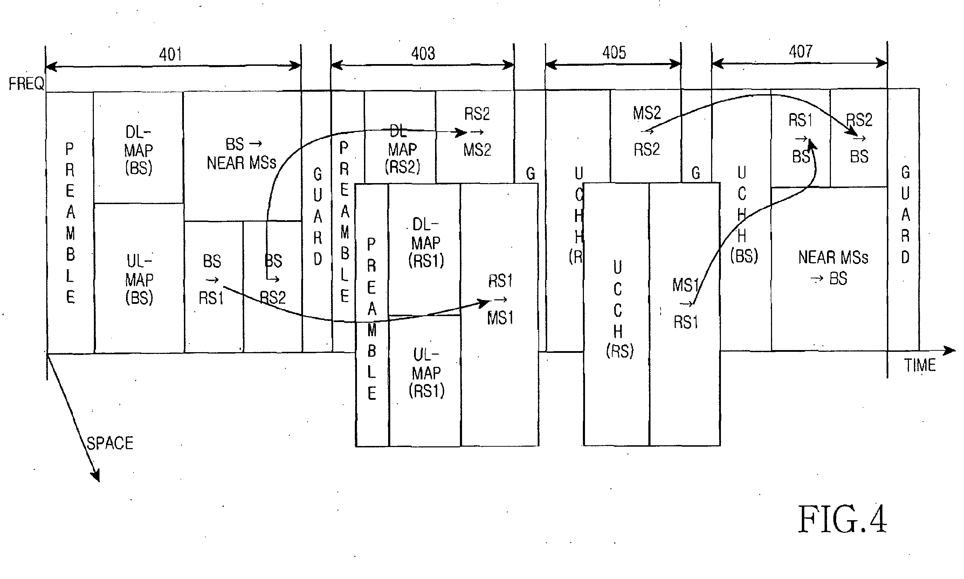

FIG. 4 is a diagram illustrating a frame structure that provides a spatial multiplexing gain using an RS according to the present invention. In FIG. 4, the abscissas and the ordinates represent time and frequency, respectively.

Referring to FIG. 4, when RSs are located without interference with each other, they can transmit and receive data in second and third sections 403 and 405 of a frame using the same time/frequency resource independently. In this manner, when the RSs are located properly, resources can be used more efficiently.

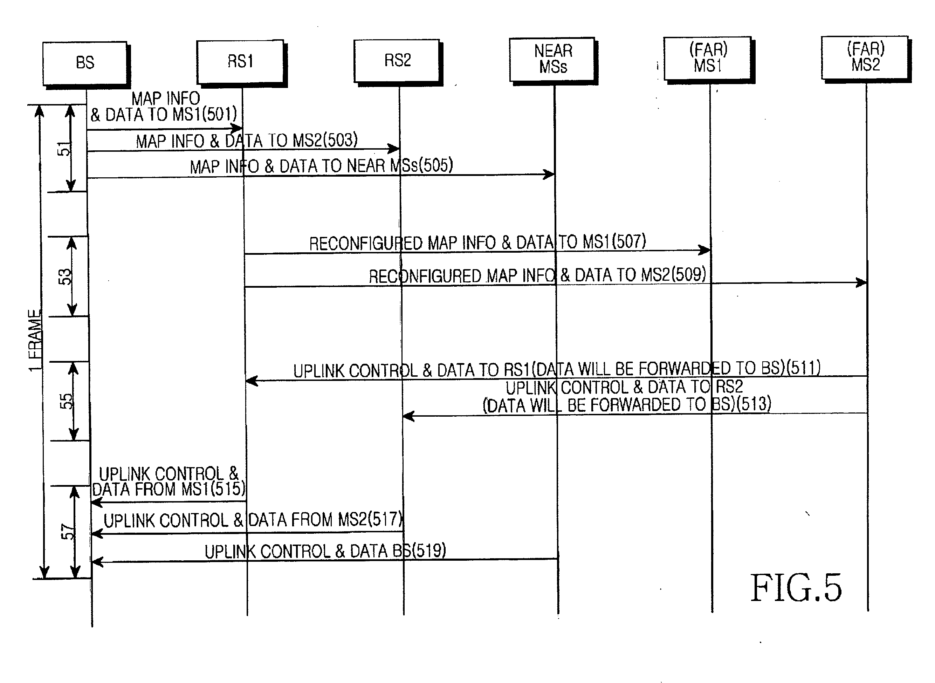

FIG. 5 is a flow diagram illustrating a signaling procedure for frame communication in a multi-hop relay BWA system according to the present invention.

Hereinafter, it is assumed that two relay stations RS1 and RS2 are communicating with a BS. A far MS communicating with the RS1 is referred to as "MS 1", and a near MS communicating with the RS2 is referred to as "MS2".

Communication in a first section 51 of a frame is as follows: In step 501, the BS transmits a BS_DL-MAP and DL data to the RS1. In step 503, the BS transmits the BS_DL-MAP and DL data to the RS2. In step 505, the BS transmits the BS_DL-MAP and DL data to near MSs. That is, RSs and near MSs receive DL signals from the BS during the first section.

Communication in a second section 53 of the frame is as follows: In step 507, the RS1 selects data of the MS1 among DL signals received from the BS and reconfigures an RS1_DL-MAP based on the selected data. Thereafter, the RS1 transmits the RS1_DL-MAP and the selected data to the MS1. In step 509, the RS2 selects data of the MS2 among DL signals received from the BS and reconfigures an RS2_DL-MAP based on the selected data. Thereafter, the RS2 transmits the reconfigured RS2_DL-MAP and the selected data to the MS2. That is, far MSs receive DL signals from RSs during the second section.

Communication in a third section 55 of the frame is as follows: In step 511, the MS2 transmits a UCCH and UL data to the RS 1. In step 513, the MS2 transmits a UCCH and UL data to the RS2. That is, RSs receive UL signals from far MSs during the third section.

Communication in a fourth section 57 of the frame is as follows: In step 515, the RS1 transmits the UCCH and UL data received from the MS1 to the BS. At this point, the RS1 may reconfigure the received UCCH prior to transmission. In step 517, the RS2 transmits the UCCH and UL data received from the MS2 to the BS. In step 519, the near MSs transmit a UCCH and UL data to the BS. That is, the BS and RSs receive UL signals from near MSs during the fourth section.

A relay station (RS) must be additionally provided in a cellular system in order to perform a multi-hop relay communication according to the present invention. An operation of the RS according to the present invention will now be described in detail.

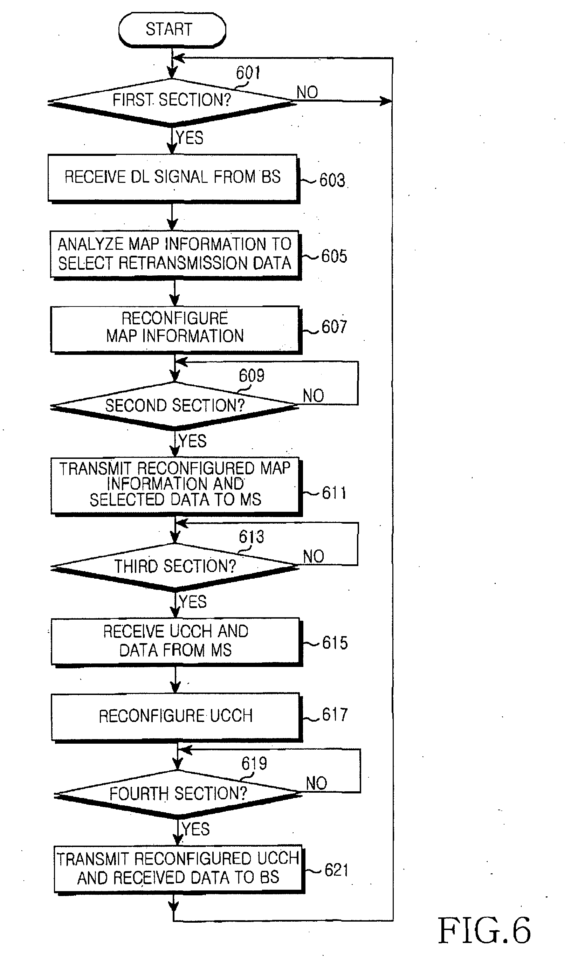

FIG. 6 is a flowchart illustrating a signaling procedure for an RS in a multi-hop relay BWA system according to the present invention. In the follow description, it is assumed that the RS has already acquired frame synchronization.

Referring to FIG. 6, the RS determines in step 601 whether a first section of a frame starts. If so, the procedure proceeds to step 603, and if not, the procedure repeats step 601. In step 603, the RS receives DL signals from a BS.

In step 605, the RS selects retransmission data by analyzing a BS_DL-MAP received from the BS. The data selection may be performed using a MAP IE shown in Table 1. That is, the RS analyzes a MAP IE to determine whether its own RS ID exists. If so, the RS selects corresponding data among the DL signals received from the BS. In step 607, the RS allocates resources to the selected data and reconfigures channel allocation information (RS_DL-MAP) according to the resource allocation.

In step 609, the RS determines whether a second section of the frame starts. If so, the procedure proceeds to step 611, and if not, the procedure repeats step 609. In step 611, the RS transmits the reconfigured RS_DL-MAP and the selected data to corresponding MSs.

In step 613, the RS determines whether a third section of the frame starts. If so, the procedure proceeds to step 615, and if not, the procedure repeats step 613. In step 615, the RS receives a UCCH and UL data from corresponding MSs. In step 617, the RS reconfigures the received UCCH if necessary.

In step 619, the RS determines whether a fourth section of the frame starts. If so, the procedure proceeds to step 621, and if not, the procedure repeats step 619. In step 621, the RS transmits the reconfigured UCCH and the UL data to the BS. Thereafter, the procedure returns to step 601 for communication of the next frame.

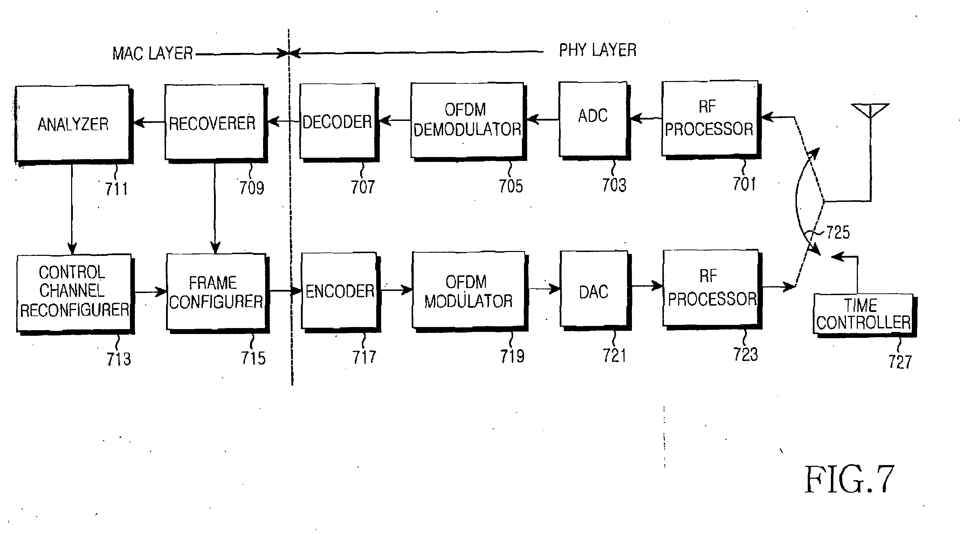

FIG. 7 is a block diagram of an RS for a multi-hop relay BWA system according to the present invention.

Referring to FIG. 7, the RS includes an antenna, a Receiver (RX) RF processor 701, an analog-to-digital converter (ADC) 703, an OFDM demodulator 705, a decoder 707, a recoverer 709, an analyzer 711, a control channel reconfigurer 713, a frame configurer 715, an encoder 717, an OFDM modulator 719, a digital-to-analog converter (DAC) 721, a Transmission (TX) RF processor 723, a switch 725 and a time controller 727.

The time controller 727 controls a switching operation of the switch 725 based on frame synchronization. For example, in a first section of a frame, the time controller 727 controls the switch 725 so that the antennal is connected to the RX RF processor 701.

During the first section, the RF processor 701 converts a baseband signal received through the antenna into an analog signal. The ADC 703 converts the analog signal into sample data. The OFDM demodulator 705 Fast Fourier Transform (FFT)-processes the sample data to output frequency-domain data.

The decoder 707 selects data of desired subcarriers from the frequency-domain data and decodes the selected data at a predetermined modulation level (MCS level).

The recoverer 709 recovers a control channel message (e.g., MAP information) and traffic data from an output bit stream of the decoder 707. The recoverer 709 provides the control channel message and the traffic data to the analyzer 711 and the frame configurer 715, respectively. The analyzer 711 analyzes the map information to determine whether an RS ID of the RS exists. If so, the analyzer 711 selects information of relay (or retransmission) traffic data and provides the selected information to the control channel reconfigurer 713.

The control channel reconfigurer 713 allocates resources using the information of the relay (or retransmission) traffic data and reconfigures a MAP (i.e., an RS_DL-MAP) using the resource allocation information. Based on the MAP received from the control channel reconfigurer 713, the frame configurer 715 selects retransmission traffic data among traffic data received from a BS. The selected traffic data is arranged and outputted to the encoder 717.

During a second section of the frame, the switch 725 is operated such that the antennal is connected to the TX RF processor 723. During the second section, the encoder 717 encodes the output data of the frame configurer 715 in accordance with a predetermined modulation level (MCS level). The OFDM modulator 719 Inverse Fast Fourier Transform (IFFT)-processes the output data of the encoder 717 to output sample data (OFDM symbol). The DAC 721 converts the sample data into an analog signal. The TX RF processor 723 converts the analog signal into an RF signal, which is transmitted through the antenna.

During a third section of the frame, the switch 725 is switched to an RX terminal such that a UL signal can be received from an MS. During a fourth section of the frame, the switch 725 is switched to a TX terminal such that the UL signal received from the MS can be transmitted to the BS. The RX and TX operations during the third and fourth sections are the same as described above, and thus a detailed description thereof will be omitted for conciseness.

In the above embodiment, the RS independently performs DL resource allocation and then reconfigures a DL-MAP. However, it will be apparent to those skilled in the art that the RS can perform UL resource allocation independently and then reconfigure a UL-MAP.

As described above, the use of the frame structure according to the present invention enables the far MSs to perform an initialization operation and a communication operation normally. In addition, the RS recovers data from the BS to retransmit only specific data corresponding to the BS. Accordingly, unnecessary retransmission can be prevented and thus resources can be used efficiently. Furthermore, because the RSs spaced apart from each other transmit different data using the same time/frequency resource, resources can be used more efficiently.

## Claims

1. A method for communicating at a Relay Station RS in a communication system, the method comprising the steps of:
receiving a Downlink DL signal from a Base Station BS and reconfiguring the received DL signal during a first section (301) of a frame; and
transmitting the reconfigured DL signal to a Mobile Station MS during a second section (303) of the frame,
wherein the reconfiguring the DL signal further comprises:
recovering a control channel message and traffic data from the DL signal received from the BS;
analyzing the control channel message to select traffic data to be relayed by the RS;
reconfiguring the control channel message using the selected traffic data; and
arranging the reconfigured control channel message and the selected traffic data to reconfigure the DL signal,
wherein the control channel message includes at least one of MS Identification ID information, modulation level information, traffic data location information and RS ID information.

2. The method of claim 1, further comprising:
receiving an Uplink UL signal from the MS and reconfiguring the received UL signal during a third section (305) of the frame; and
transmitting the reconfigured UL signal to the BS during a fourth section (307) of the frame.

3. The method of claim 2, wherein the second section includes at least one of a preamble field for transmitting a preamble signal, a data field for transmitting traffic data, a first control field for transmitting resource allocation information of the data field and a second control field for transmitting resource allocation information of the third section.

4. The method of claim 2, wherein the third section includes at least one of a control field for transmitting a UL control signal and a data field for transmitting traffic data.

5. The method of claim 1, wherein the control channel message is reconfigured by allocating resources to the selected traffic data independently.

6. The method of claim 1, wherein when RSs communicating during the second section are located in different areas and use the same resource.

7. A Relay Station RS for a communication system, comprising:
a recoverer (709) for recovering a control channel message and traffic data from a first section signal of a frame received from a Base Station BS;
a analyzer (711) for analyzing the control channel message to select traffic data; and
a control channel reconfigurer (713) for allocating resources to the selected traffic data and reconfiguring the control channel message according to the resource allocation,
wherein the control channel message includes at least one of MS Identification ID information, modulation level information, traffic data location information and RS ID information.

8. The relay station of claim 7, further comprising a frame configurer (715) for arranging the reconfigured control channel message and the selected traffic data to create a second section signal of the frame to be transmitted to a Mobile Station MS.

9. The relay station of claim 7, further comprising a controller for controlling the Transmission/Reception TX/RX operation of the RS based on frame synchronization such that a Downlink DL signal is received from the BS during a first section of the frame, a DL signal is transmitted to the MS during a second section of the frame, an Uplink UL signal is received from the MS during a third section of the frame and a UL signal is transmitted to the BS during a fourth section of the frame.

10. The relay station of claim 9, wherein the second section includes at least one of a preamble field for transmitting a preamble signal, a data field for transmitting traffic data, a first control field for transmitting resource allocation information of the data field, and a second control field for transmitting resource allocation information of the third section.

11. The relay station of claim 9, wherein the third section includes at least one of a control field for transmitting a UL control signal and a data field for transmitting traffic data.

12. A method for communicating at a Base Station BS in a communication system, the method comprising the steps of:
determining where Downlink DL data needs to be transmitted through a Relay Station RS when the DL data is generated;
generating a channel allocation message including identification ID information of a corresponding RS if the DL data needs to be transmitted through the RS; and
configuring and transmitting a DL signal including the channel allocation message and the DL data,
wherein the channel allocation information includes at least one of MS ID information, modulation level information, traffic data location information and RS ID information.

13. A method for communicating a frame in a communication system using the method for communicating at the Base Station according to claim 12 and the method for communicating at the Relay Station according to claim 1, the method comprising the steps of:
transmitting a Downlink DL signal including a control channel message and traffic data from a Base Station BS to a relay station RS and a near Mobile Station MS during a first section (301) of the frame, the near MS being located inside a cell coverage area of the BS and communicating directly with the BS;
transmitting a DL signal including a reconfigured control channel message and selected traffic data from the RS to a far MS during a second section (303) of the frame, the far MS being located outside the cell coverage area of the BS;
transmitting an Uplink UL signal from the far MS to the RS during a third section (305) of the frame; and
transmitting an UL signal from the near MS and the UL signal from the far MS received by the RS to the BS during a fourth section (307), of the frame;
wherein the signal transmitted during the first section of the frame includes at least one of MS ID information, modulation level information, traffic data location information and RS ID information.

14. The method of claim 13, wherein the first section includes at least one of a preamble field for transmitting a preamble signal, a first data field for allocating traffic data to be transmitted to an RS, a second data field for allocating traffic data to be transmitted to a far MS, a first control field for allocating resource allocation information of the first and second data fields, and a second control field for allocating resource allocation information of the fourth section, the far MS being located outside the cell coverage area of the BS.

15. The method of claim 14, wherein the first data field and the second data field are divided using one of a Frequency Division Multiplexing FDM scheme, a Time Division Multiplexing TDM scheme and a burst division scheme.

16. The method of claim 13, wherein the second section includes at least one of a preamble field for allocating a preamble signal, a data field for allocating traffic data to be transmitted to a far MS, a first control field for allocating resource allocation information of the data field and a second control field for allocating resource allocation information of the third section, the far MS being located outside the cell coverage area of the BS.

17. The method of claim 13, wherein, wherein the third section includes at least one of a control field for allocating an Uplink UL control signal to be transmitted to an RS and a data field for allocating traffic data to be transmitted to an RS.

18. The method of claim 17, wherein the control field includes at least one of a ranging channel, a random access channel, a Channel Quality Information CQI feedback channel and a Hybrid Automatic Repeat reQuest ACKnowledgement/Negative-ACc'Knowledgement H-ARQ ACK/NACK channel.

19. The method of claim 13, wherein the fourth section includes at least one of a control field for allocating an Uplink UL control signal to be transmitted to a BS, a first data field for allocating traffic data transmitted by an RS and a second data field for allocating traffic data transmitted by a near MS, the near MS being located inside a cell coverage area of the BS and communicating directly with the BS.

20. The method of claim 13, wherein when RSs communicating during the second section are located in different areas and use the same resource.

## Patentansprüche

1. Verfahren zum Kommunizieren an einer Relaisstation RS in einem Kommunikationssystem, wobei das Verfahren folgende Schritte umfasst:
Empfangen eines Downlink-, DL-, Signals von einer Basisstation BS und Neukonfigurieren des Empfangenen DL-Signals während eines ersten Abschnittes (301) eines Frames; und
Senden des neukonfigurierten DL-Signals zu einer Mobilstation MS während eines zweiten Abschnittes (303) des Frames,
wobei das Neukonfigurieren des DL-Signals weiterhin umfasst:
Wiederherstellen einer Steuerkanalnachricht und von Verkehrsdaten aus dem DL-Signal, das von der BS empfangen wird;
Analysieren der Steuerkanalnachricht, um Verkehrsdaten zu wählen, die von der RS weiterzuleiten sind;
Neukonfigurieren der Steuerkanalnachricht mit Hilfe der gewählten Verkehrsdaten; und
Einrichten der neukonfigurierten Steuerkanalnachricht und der gewählten Verkehrsdaten, um das DL-Signal neu zu konfigurieren,
wobei die Steuerkanalnachricht MS-Identifikations-, ID-, Informationen und/oder Modulationspegelinformationen und/oder Verkehrsdatenortsinformationen und/oder RS-ID-Informationen umfasst.

2. Verfahren nach Anspruch1, weiterhin umfassend:
Empfangen eines Uplink-, UL-, Signals von der MS und Neukonfigurieren des empfangenen UL-Signals während eines dritten Abschnittes (305) des Frames; und
Senden des neukonfigurierten UL-Signals zu der BS während eines vierten Abschnittes (307) des Frames.

3. Verfahren nach Anspruch 2, bei dem der zweite Abschnitt ein Präambelfeld zum Senden eines Präambelsignals und/oder ein Datenfeld zum Senden von Verkehrsdaten und/oder ein erstes Steuerfeld zum Senden von Ressourcen-Zuordnungsinformationen des Datenfeldes und/oder ein zweites Steuerfeld zum Senden von Ressourcen-Zuordnungsinformationen des dritten Abschnittes umfasst.

4. Verfahren nach Anspruch 2, bei dem der dritte Abschnitt ein Steuerfeld zum Senden eines UL-Steuersignals und/oder ein Datenfeld zum Senden von Verkehrsdaten umfasst.

5. Verfahren nach Anspruch 1, bei dem die Steuerkanalnachricht neukonfiguriert wird, indem den gewählten Verkehrsdaten Ressourcen unabhängig zugeordnet werden.

6. Verfahren nach Anspruch 1, bei dem sich RSs, die während des zweiten Abschnittes kommunizieren, in unterschiedlichen Bereichen befinden und dieselbe Ressource verwenden.

7. Relaisstation RS für ein Kommunikationssystem, umfassend:
eine Wiederherstellungseinrichtung (709) zum Wiederherstellen einer Steuerkanalnachricht und von Verkehrsdaten aus einem Signal eines ersten Abschnittes eines Frames, der von einer Basisstation BS empfangen wird;
eine Analysiereinrichtung (711) zum Analysieren der Steuerkanalnachricht, um Verkehrsdaten zu wählen; und
eine Steuerkanal-Neukonfiguriereinrichtung (713) zum Zuweisen von Ressourcen zu den gewählten Verkehrsdaten und Neukonfigurieren der Steuerkanalnachricht gemäß der Ressourcenzuweisung,
wobei die Steuerkanalnachricht MS-Identifikations-, ID-, Informationen und/oder Modulationspegelinformationen und/oder Verkehrsdatenortinformationen und RS-ID-Informationen umfasst.

8. Relaisstation nach Anspruch 7, weiterhin umfassend eine Frame-Konfiguriereinrichtung (715) zum Einrichten der neukonfigurierten Steuerkanalnachricht und der gewählten Verkehrsdaten, um ein Signal eines zweiten Abschnittes des Frames zu erzeugen, der zu einer Mobilstation MS gesendet werden soll.

9. Relaisstation nach Anspruch 7, weiterhin umfassend eine Steuereinrichtung zum Steuern des Sende-/Empfangs- TX-/RX-Vorgangs der RS auf der Basis von Frame-Synchronisation, so dass ein Downlink-, DL-, Signal von der BS während eines ersten Abschnittes des Frames empfangen wird, ein DL-Signal zu der MS während eines zweiten Abschnittes des Frames gesendet wird, ein Uplink-, UL-, Signal von der MS während eines dritten Abschnittes des Frames empfangen wird und ein UL-Signal zu der BS während eines vierten Abschnittes des Frames gesendet wird.

10. Relaisstation nach Anspruch 9, bei der der zweite Abschnitt ein Präambelfeld zum Senden eines Präambelsignals und/oder ein Datenfeld zum Senden von Verkehrsdaten und/oder ein erstes Steuerfeld zum Senden von Ressourcen-Zuordnungsinformationen des Datenfeldes und/oder ein zweites Steuerfeld zum Senden von Ressourcen-Zuordnungsinformationen des dritten Abschnittes umfasst.

11. Relaisstation nach Anspruch 9, bei der der dritte Abschnitt ein Steuerfeld zum Senden eines UL-Steuersignals und/oder ein Datenfeld zum Senden von Verkehrsdaten umfasst.

12. Verfahren zum Kommunizieren an einer Basisstation BS in einem Kommunikationssystem, wobei das Verfahren folgende Schritte umfasst:
Bestimmen, wo Downlink-, DL-, Daten durch eine Relaisstation RS gesendet werden müssen, wenn die DL-Daten erzeugt werden;
Erzeugen einer Kanalzuordnungsnachricht, die Identifikations-, ID-, Informationen einer entsprechenden RS umfasst, sofern die DL-Daten durch die RS gesendet werden müssen; und
Konfigurieren und Senden eines DL-Signals, das die Kanalzuordnungsnachricht und die DL-Daten umfasst,
wobei die Kanalzuordnungsinformationen MS-ID-Informationen und/oder Modulationspegelinformationen und/oder Verkehrsdatenortsinformationen und/oder RS-ID-Informationen umfassen.

13. Verfahren zum Kommunizieren eines Frames in einem Kommunikationssystem mit Hilfe des Verfahrens zum Kommunizieren an der Basisstation nach Anspruch 12 und des Verfahrens zum Kommunizieren an der Relaisstation nach Anspruch 1, wobei das Verfahren folgende Schritte umfasst:
Senden eines Downlink-, DL-, Signals, das eine Steuerkanalnachricht und Verkehrsdaten umfasst, von einer Basisstation BS zu einer Relaisstation RS und einer nahegelegenen Mobilstation MS während eines ersten Abschnittes (301) des Frames, wobei sich die nahegelegene MS in einem Zellenabdeckungsbereich der BS befindet und direkt mit der BS kommuniziert;
Senden eines DL-Signals, das eine neukonfigurierte Steuerkanalsnachricht und gewählte Verkehrsdaten umfasst, von der RS zu einer entfernten MS während eines zweiten Abschnittes (303) des Frames, wobei sich die entfernte MS außerhalb des Zellenabdeckungsbereiches der BS befindet;
Senden eines Uplink-, UL-, Signals von der entfernten MS zu der RS während eines dritten Abschnittes (305) des Frames; und
Senden eines UL-Signals von der nahegelegenen MS und des UL-Signals von der entfernten MS, das von der RS empfangen wird, zu der BS während eines vierten Abschnittes (307) des Frames;
wobei das Signal, das während des ersten Abschnittes des Frames gesendet wird, MS-ID-Informationen und/oder Modulationspegelinformationen und/oder Verkehrsdatenortsinformationen und/oder RS-ID-Informationen umfasst.

14. Verfahren nach Anspruch 13, bei dem der erste Abschnitt ein Präambelfeld zum Senden eines Präambelsignals und/oder ein erstes Datenfeld zum Zuordnen von Verkehrsdaten, die zu einer RS gesendet werden sollen, und/oder ein zweites Datenfeld zum Zuordnen von Verkehrsdaten, die zu einer entfernten MS gesendet werden sollen, und/oder ein erstes Steuerfeld zum Zuordnen von Ressourcen-Zuordnungsinformationen des ersten und des zweiten Datenfeldes und/oder ein zweites Steuerfeld zum Zuordnen von Ressourcen-Zuordnungsinformationen des vierten Abschnittes umfasst, wobei sich die entfernte MS außerhalb des Zellenabdeckungsbereiches befindet.

15. Verfahren nach Anspruch 14, bei dem das erste Datenfeld und das zweite Datenfeld mit Hilfe eines Frequenzmultiplex-, FDM-, Verfahrens, eines Zeitmultiplex-, TDM-, Verfahrens und eines Burst-Division-Verfahrens unterteilt werden.

16. Verfahren nach Anspruch 13, bei dem der zweite Abschnitt ein Präambelfeld zum Zuordnen eines Präambelsignals und/oder ein Datenfeld zum Zuordnen von Verkehrsdaten, die zu einer entfernten MS zu senden sind, und/oder ein erstes Steuerfeld zum Zuordnen von Ressourcen-Zuordnungsinformationen des Datenfeldes und/oder ein zweites Steuerfeld zum Zuordnen von Ressourcen-Zuordnungsinformationen des dritten Abschnittes umfasst, wobei sich die entfernte MS außerhalb des Zellenabdeckungsbereiches der BS befindet.

17. Verfahren nach Anspruch 13, bei dem der dritte Abschnitt ein Steuerfeld zum Zuordnen eines Uplink-, UL-, Steuersignals, das zu einer RS gesendet werden soll, und/oder ein Datenfeld zum Zuordnen von Verkehrsdaten umfasst, die zu einer RS zu senden sind.

18. Verfahren nach Anspruch 17, bei dem das Steuerfeld einen Reichweitenkanal und/oder einen Zufallszugriffskanal und/oder einen Kanalqualitätsinformations-, CQI-, Rückmeldekanal und/oder einen Hybrid Automatic Repeat reQuest ACKnowledgement/Negative-ACKnowledgement H-ARQ-ACK/NACK-Kanal umfasst.

19. Verfahren nach Anspruch 13, bei dem der vierte Abschnitt ein Steuerfeld zum Zuordnen eines Uplink-, UL-, Steuersignals, das zu einer BS gesendet werden soll, und/oder ein erstes Datenfeld zum Zuordnen von Verkehrsdaten, die von einer RS gesendet werden sollen, und/oder ein zweites Datenfeld zum Zuordnen von Verkehrsdaten, die von einer nahegelegenen MS gesendet werden, umfasst, wobei sich die nahegelegene MS innerhalb eines Zellabdeckungsbereiches der BS befindet und direkt mit der BS kommuniziert.

20. Verfahren nach Anspruch 13, bei dem sich RSs, die während des zweiten Abschnittes kommunizieren, in unterschiedlichen Bereichen befinden und dieselbe Ressource verwenden.

## Revendications

1. Procédé de communication au niveau d'une station relais RS dans un système de communication, le procédé comprenant les étapes consistant à :
recevoir un signal de liaison descendante DL provenant d'une station de base BS et reconfigurer le signal de DL reçu pendant une première section (301) d'une trame ; et
transmettre le signal de DL reconfiguré à une station mobile MS pendant une deuxième section (303) de la trame,
dans lequel la reconfiguration du signal de DL comprend en outre :
la récupération d'un message de canal de commande et de données de trafic à partir du signal de DL reçu depuis la BS ;
l'analyse du message de canal de commande pour sélectionner les données de trafic destinées à être retransmises par la RS ;
la reconfiguration du message de canal de commande en utilisant les données de trafic sélectionnées ; et
l'agencement du message de canal de commande reconfiguré et des données de trafic sélectionnées pour reconfigurer le signal de DL,
dans lequel le message de canal de commande comporte au moins une information parmi une information d'ID d'identification de MS, une information de niveau de modulation, une information d'emplacement de données de trafic et une information d'ID de RS.

2. Procédé selon la revendication 1, comprenant en outre :
la réception d'un signal de liaison montante UL depuis la MS et la reconfiguration du signal d'UL reçu pendant une troisième section (305) de la trame ; et
la transmission du signal d'UL reconfiguré à la BS pendant une quatrième section (307) de la trame.

3. Procédé selon la revendication 2, dans lequel la deuxième section comporte au moins un champ parmi un champ de préambule pour transmettre un signal de préambule, un champ de données pour transmettre des données de trafic, un premier champ de commande pour transmettre une information d'allocation de ressources du champ de données et un second champ de commande pour transmettre une information d'allocation de ressources de la troisième section.

4. Procédé selon la revendication 2, dans lequel la troisième section comporte au moins un champ parmi un champ de commande pour transmettre un signal de commande d'UL et un champ de données pour transmettre des données de trafic.

5. Procédé selon la revendication 1, dans lequel le message de canal de commande est reconfiguré en allouant indépendamment des ressources aux données de trafic sélectionnées.

6. Procédé selon la revendication 1, dans lequel les RS qui communiquent pendant la deuxième section sont situées dans des zones différentes et utilisent la même ressource.

7. Station relais RS pour un système de communication, comprenant :
un dispositif de récupération (709) pour récupérer un message de canal de commande et des données de trafic à partir d'un signal de première section d'une trame reçue depuis une station de base BS ;
un analyseur (711) pour analyser le message de canal de commande pour sélectionner des données de trafic ; et
un dispositif de reconfiguration de canal de commande (713) pour allouer des ressources aux données de trafic sélectionnées et reconfigurer le message de canal de commande en fonction de l'allocation de ressources,
dans laquelle le message de canal de commande comporte au moins une information parmi une information d'ID d'identification de MS, une information de niveau de modulation, une information d'emplacement de données de trafic et une information d'ID de RS.

8. Station relais selon la revendication 7, comprenant en outre un dispositif de configuration de trame (715) pour agencer le message de canal de commande reconfiguré et les données de trafic sélectionnées pour créer un signal de deuxième section de la trame destinée à être transmise à une station mobile MS.

9. Station relais selon la revendication 7, comprenant en outre un contrôleur pour commander l'opération d'émission/réception TX/RX de la RS en se basant sur la synchronisation de trame telle qu'un signal de liaison descendante DL est reçu depuis la BS pendant une première section de la trame, un signal de DL est transmis à la MS pendant une deuxième section de la trame, un signal de liaison montante UL est reçu depuis la MS pendant une troisième section de la trame et un signal d'UL est transmis à la BS pendant une quatrième section de la trame.

10. Station relais selon la revendication 9, dans laquelle la deuxième section comporte au moins un champ parmi un champ de préambule pour transmettre un signal de préambule, un champ de données pour transmettre des données de trafic de transmission, un premier champ de commande pour transmettre une information d'allocation de ressources du champ de données et un second champ de commande pour transmettre une information d'allocation de ressources de la troisième section.

11. Station relais selon la revendication 9, dans laquelle la troisième section comporte au moins un champ parmi un champ de commande pour transmettre un signal de commande d'UL et un champ de données pour transmettre des données de trafic.

12. Procédé de communication au niveau d'une station de base BS dans un système de communication, le procédé comprenant les étapes consistant à :
déterminer où doivent être transmises des données de liaison descendante DL par l'intermédiaire d'une station relais RS lorsque les données de DL sont générées ;
générer un message d'allocation de canal incluant des informations d'ID d'identification d'une RS correspondante si les données de DL doivent être transmises par l'intermédiaire de la RS ; et
configurer et transmettre un signal de DL incluant le message d'allocation de canal et les données de DL,
dans lequel l'information d'allocation de canal comporte au moins une information parmi une information d'ID de MS, une information de niveau de modulation, une information d'emplacement de données de trafic et une information d'ID de RS.

13. Procédé de communication d'une trame dans un système de communication utilisant le procédé de communication au niveau de la station de base selon la revendication 12 et le procédé de communication au niveau de la station relais selon la revendication 1, le procédé comprenant les étapes consistant à :
transmettre un signal de liaison descendante DL incluant un message de canal de commande et des données de trafic depuis une station de base BS à une station relais RS et une station mobile MS proche pendant une première section (301) de la trame, la MS proche étant située dans une zone de couverture de cellule de la BS et communiquant directement avec la BS ;
transmettre un signal de DL incluant un message de canal de commande reconfiguré et des données de trafic sélectionnées de la RS à une MS éloignée pendant une deuxième section (303) de la trame, la MS éloignée étant située en dehors de la zone de couverture de cellule de la BS ;
transmettre un signal de liaison montante UL de la MS éloignée à la RS pendant une troisième section (305) de la trame ; et
transmettre à la BS un signal d'UL depuis la MS proche et le signal d'UL depuis la MS éloignée, reçu par la RS pendant une quatrième section (307) de la trame ;
dans lequel le signal transmis pendant la première section de la trame comporte au moins une information parmi une information d'ID de MS, une information de niveau de modulation, une information d'emplacement de données de trafic et une information d'ID de RS.

14. Procédé selon la revendication 13, dans lequel la première section comporte au moins un champ parmi un champ de préambule pour transmettre un signal de préambule, un premier champ de données pour allouer des données de trafic à transmettre à une RS, un second champ de données pour allouer des données de trafic à transmettre à une MS éloignée, un premier champ de commande pour allouer une information d'allocation de ressources des premier et second champs de données et un second champ de commande pour allouer une information d'allocation de ressources de la quatrième section, la MS éloignée étant située en dehors de la zone de couverture de cellule de la BS.

15. Procédé selon la revendication 14, dans lequel le premier champ de données et le second champ de données sont divisés en utilisant un aménagement parmi un aménagement de multiplexage par répartition en fréquence FDM, un aménagement de multiplexage par répartition dans le temps TDM et un aménagement par répartition de salves.

16. Procédé selon la revendication 13, dans lequel la deuxième section comporte au moins un champ parmi un champ de préambule pour allouer un signal de préambule, un champ de données pour allouer des données de trafic destinées à être transmises à une MS éloignée, un premier champ de commande pour allouer une information d'allocation de ressources du champ de données et un second champ de commande pour allouer une information d'allocation de ressources de la troisième section, la MS éloignée étant située en dehors de la zone de couverture de cellule de la BS.

17. Procédé selon la revendication 13, dans lequel la troisième section comporte au moins un champ parmi un champ de commande pour allouer un signal de commande de liaison montante UL destiné à être transmis à une RS et un champ de données pour allouer des données de trafic destinées à être transmises à une RS.

18. Procédé selon la revendication 17, dans lequel le champ de commande comporte au moins un canal parmi un canal de télémétrie, un canal à accès aléatoire, un canal de rétroaction d'information de qualité de canal CQI et un canal d'accusé de réception de requête automatique de répétition hybride/accusé de réception négatif H-ARQ ACK/NACK.

19. Procédé selon la revendication 13, dans lequel la quatrième section comporte au moins un champ parmi un champ de commande pour allouer un signal de commande de liaison montante UL destiné à être transmis à une BS, un premier champ de données pour allouer des données de trafic transmises par une RS et un second champ de données pour allouer des données de trafic transmises par une MS proche, la MS proche étant située à l'intérieur d'une zone de couverture de cellule de la BS et communiquant directement avec la BS.

20. Procédé selon la revendication 13, dans lequel les RS qui communiquent pendant la deuxième section sont situées dans des zones différentes et utilisent la même ressource.
